# FASCICULE DE BREVET EUROPEEN

(11) **EP 1 771 684 B1**
(45) Date de publication et mention de la délivrance du brevet: **21.10.2020**
(21) Numéro de dépôt: 05795002.4
(22) Date de dépôt: 26.07.2005
(51) Int. Cl.: F24B 1/192, F24B 13/00, C03C 10/00, C03C 17/34

(54) **CHEMINÉE OU POÊLE AVEC UNE PLAQUE VITROCÉRAMIQUE ET PROCÉDÉ DE FABRICATION D'UNE TELLE PLAQUE**
KAMIN ODER HERD MIT EINER GLASKERAMIKPLATTE UND VERFAHREN ZUR HERSTELLUNG EINER SOLCHEN PLATTE
FIREPLACE OR STOVE WITH A CERAMIC GLASS PANEL AND METHOD FOR MANUFACTURING SUCH A PANEL

(30) Priorité: 30.07.2004 FR 0451744
(43) Date de publication de la demande: 11.04.2007
(73) Titulaire: Eurokera S.N.C., 02405 Château-Thierry Cedex (FR)
(72) Inventeur: VILATO, Pablo, F-75014 PARIS (FR); NELSON, Mieke, Greer, SC 29651 (US); RUTLEDGE, Atticus, Simpsonville, SC 29681 (US)
(74) Mandataire: Saint-Gobain Recherche
(86) Numéro de dépôt international: PCT/FR2005/050617
(87) Numéro de publication internationale: WO 2006/021712

(56) Documents cités:
- EP-A- 0 780 640
- EP-A1- 0 511 044
- WO-A-03/006393
- WO-A-03/009061
- DE-A1- 10 123 601
- DE-U1- 29 800 524
- FR-A- 2 845 774
- JP-A- S60 212 704
- JP-A- 2004 193 050
- US-A- 4 048 978
- US-A- 4 450 201
- US-A- 4 667 607
- US-A- 6 024 084
- US-A1- 2004 146 721

## Description

La présente invention concerne un dispositif chauffant de type insert de cheminée ou poêle.

Outre les cheminées à foyer ouvert, de nouveaux types d'appareils de chauffage à caractère essentiellement esthétique et/ou fonctionnel se sont développés ces dernières décennies, tels que les inserts ou foyers inserts de cheminée ou de nouveaux types de poêles d'installation et d'entretien facile, répondant à de nombreuses exigences en termes notamment de confort et de sécurité. Afin de profiter du plaisir lié à l'observation des foyers en activité au sein de ces dispositifs, ils sont généralement munis d'une fenêtre, en façade avant du dispositif, le plus souvent intégrée dans une porte permettant l'accès au foyer et traditionnellement en matériau verrier ; dans une cheminée à foyer ouvert, la protection assurée par cette fenêtre ou porte peut parallèlement être assurée par un pare-flamme pouvant également être en matériau verrier.

Dans les inserts de cheminée ou poêles notamment, pour des raisons de sécurité ou de confort d'utilisation, il est également de plus en plus fréquent de remplacer les systèmes de chauffe à bois traditionnels par des systèmes de chauffe plus sophistiqués, incorporant des conduites ou circuits pour l'alimentation en combustible et/ou la circulation d'air, ces conduites et circuits pouvant cependant paraître peu esthétiques lorsqu'ils ne sont pas cachés par les flammes en l'absence de fonctionnement de ces dispositifs.

Le but de la présente invention a donc été de proposer un dispositif chauffant de type insert de cheminée ou poêle, à la fois esthétique et fonctionnel tout en restant conforme aux exigences existant dans ce domaine. En particulier, la présente invention a mis au point une plaque en matériau verrier convenant à l'utilisation en façade de ce type de dispositif et répondant aux objectifs ainsi définis, en particulier permettant de conserver l'aspect visuel attractif du foyer en activité de ces dispositifs tout en masquant l'éventuelle structure interne inesthétique desdits foyers au repos, la difficulté de mettre au point ce type de produit étant notamment liée aux exigences élevées de résistance, en particulier en température, de ce type de produit ainsi qu'aux a priori existant en matière d'association de matériaux de caractéristiques différentes soumis à de telles conditions de fonctionnement particulièrement dures.

Ce but a été atteint par le dispositif selon la revendication 1.

Rappelons qu'une vitrocéramique est à l'origine un verre, dit verre précurseur, dont la composition chimique spécifique permet de provoquer par des traitements thermiques adaptés, dits de céramisation, une cristallisation contrôlée. Cette structure spécifique en partie cristallisée confère à la vitrocéramique des propriétés uniques. Cependant, il est très délicat de faire des modifications sur ces plaques et/ou sur leur procédé d'obtention sans risquer un effet défavorable sur les propriétés recherchées; en particulier, il n'avait jamais été envisagé d'adjoindre un revêtement réfléchissant à ce type de matériau dans le type d'application présentement envisagé en raison notamment des risques de dégradation d'un tel revêtement, considérant notamment les coefficients de dilatation différents de ces types de matériaux et le risque de craquèlement lié à la fréquence des chocs thermiques envisagés.

De façon surprenante, la présente invention a montré qu'une telle association était possible et avantageuse.

La présente invention concerne un dispositif chauffant de type insert de cheminée ou poêle, ce dispositif comprenant au moins une plaque formée d'au moins un substrat en vitrocéramique comprenant au moins un revêtement réfléchissant en face destinée à être tournée vers l'extérieur du dispositif chauffant, ladite plaque présentant une réflexion lumineuse R_{L} comprise entre 20 et 80%, le revêtement étant formé par un empilement de couches minces à base de matériau diélectrique alternativement à forts et faibles indices de réfraction comprenant l'alternance de couches d'oxydes suivante : TiO₂ /SiO₂/TiO₂.

Cette plaque se trouve préférentiellement en face avant du dispositif, par exemple intégrée à une porte permettant l'accès au foyer ou intégrée à la structure comme fenêtre ou éventuellement amovible, dans le cas notamment d'une plaque couplée au foyer façon pare-flamme.

La présente invention concerne également un procédé de fabrication de ladite plaque comprenant une étape de dépôt d'au moins un revêtement réfléchissant sur le substrat en vitrocéramique.

Par plaque vitrocéramique, on entend par la suite non seulement les plaques réalisées en vitrocéramique proprement dite mais également les plaques en tout autre matériau analogue résistant à haute température et présentant un coefficient de dilatation nul ou quasi-nul (par exemple inférieur à 15.10⁻⁷ K⁻¹). De préférence cependant, il s'agit d'une plaque en vitrocéramique proprement dite.

La combinaison du revêtement réfléchissant au substrat en vitrocéramique, offre l'avantage de masquer de façon plus ou moins importante le foyer en cas d'inactivité tout en permettant la vision du feu en cas de fonctionnement. La plaque selon l'invention répond également aux exigences requises dans ce type d'application; en particulier elle présente une résistance à la température (absence de dégradation et délaminage notamment) d'au moins 500°C, de préférence d'au moins 600°C, de façon particulièrement préférée d'au moins 650°C, voire 700°C selon le revêtement choisi. La plaque selon l'invention présente également une bonne résistance aux risques de rayures ou de chocs.

Le revêtement se trouve en face extérieure de la plaque, c'est à dire la face destinée à être tournée vers l'extérieur du dispositif chauffant, cette face n'étant pas en contact direct avec le feu lors du fonctionnement du dispositif.

La plaque du dispositif chauffant selon l'invention (présentant le revêtement réfléchissant, comme défini) présente une réflexion lumineuse R_{L} (dans le domaine des longueurs d'onde du visible - intégrée entre 0,38 µm et 0,78 µm - selon l'illuminant D₆₅) comprise entre 20 et 80%, de façon particulièrement préférée comprise entre 30 (voire 40) et 70%. Elle présente préférentiellement une transmission lumineuse T_{L} comprise entre 10 et 78% (dans le domaine des longueurs d'onde du visible - intégrée entre 0,38 µm et 0,78 µm - selon l'illuminant D₆₅).

De préférence, le substrat formant la plaque est transparent, en particulier présente au moins une transmission lumineuse T_{L} supérieure à 70%, de façon particulièrement préférée supérieure à 80%. Il peut éventuellement être teinté dans la masse, ou décoré par exemple avec de l'émail. L'utilisation d'un substrat dit translucide, voire opaque, peut également être envisagée, la vision du feu en activité pouvant cependant être réduite dans ce cas.

Le revêtement est formé par un empilement de plusieurs couches. Il comprend avantageusement au moins une couche de type métallique et/ou au moins une couche à base de matériau diélectrique.

Selon l'invention, le revêtement est formé d'un empilement de couches minces à base de matériau diélectrique alternativement à forts (de préférence supérieur à 1.8, voire 1.95, voire 2, comme explicité précédemment) et faibles (de préférence inférieur à 1.65) indices de réfraction, notamment de matériau de type oxyde métallique (ou nitrure ou oxynitrure de métaux), tel que TiO₂, SiO₂,., la couche déposée le cas échéant en dernier et se trouvant donc en face extérieure de la plaque étant une couche de fort indice de réfraction.

Comme matériau de couche à fort indice de réfraction, on peut citer par exemple TiO₂ ou éventuellement SnO₂, Si₃N₄, SnₓZn_{y}O_{z}, TiZnOx ou SiₓTi_{y}O_{z}, ZnO, ZrO₂, Nb₂O₅, etc. Comme matériau de couche à faible indice de réfraction, on peut citer par exemple SiO₂, ou éventuellement un oxynitrure et/ou un oxycarbure de silicium, ou un oxyde mixte de silicium et d'aluminium, ou un composé fluoré par exemple de type MgF₂ ou AlF₃, etc.

Selon l'invention l'empilement comprend au moins trois couches, la réflexion souhaitée se produisant par l'action combinée des différentes couches de l'empilement, la couche la plus proche du substrat étant une couche de fort indice de réfraction, la couche intermédiaire étant une couche à faible indice de réfraction, et la couche extérieure étant une couche à fort indice de réfraction. Il s'agit d'un empilement comprenant l'alternance de couches d'oxydes suivante : (substrat)- TiO₂ /SiO₂/TiO₂.

De préférence, l'épaisseur (géométrique) du revêtement est comprise entre 20 et 1000 nm (l'épaisseur du substrat étant généralement de quelques millimètres, notamment entre 3 et 6 mm, le plus souvent autour de 4 mm pour un substrat en vitrocéramique). Dans le cas d'un revêtement formé de plusieurs couches (sous forme généralement d'un empilement de couches), l'épaisseur de chacune des couches peut varier entre 5 et 160 nm, généralement entre 20 et 150 nm.

Selon un premier mode de réalisation, les épaisseurs de ces couches sont de quelques dizaines de nanomètres (par exemple de l'ordre de 60-80 nm) pour chacune des couches respectives de TiO₂ et SiO₂, le revêtement présentant dans ce cas un aspect argenté, et selon un second mode de réalisation, les épaisseurs des couches de TiO₂ sont du même ordre que précédemment pour une épaisseur deux fois plus importante de la couche de SiO₂ (par exemple de l'ordre de 130-150 nm), le revêtement présentant dans ce cas un aspect doré.

La plaque peut également être munie d'un revêtement présentant un autre type de fonctionnalité, éventuellement couplé avec celui recherché selon l'invention (sans que cette fonctionnalité supplémentaire se fasse au détriment des propriétés recherchées) mais plus généralement en face opposée, tel qu'un revêtement à fonction bas-émissive (par exemple en oxyde de métal dopé comme SnO2:F ou oxyde d'indium dopé à l'étain ITO ou oxyde de zinc dopé à l'aluminium ZnO:Al) favorisant la pyrolyse des suies pouvant se déposer à l'intérieur du foyer, ou un revêtement en SiO₂ formant une barrière contre le soufre contenu dans les fumées de combustion.

La plaque peut être entourée d'un cadre et/ou présenter des bords libres généralement façonnés (arrondis, biseautés,...). Elle est généralement plane mais peut également être bombée ou présenter des déformations ou pliures.

L'invention a également pour objet un procédé de fabrication d'une plaque du dispositif selon l'invention. Pour mémoire, la fabrication des plaques vitrocéramiques s'opère généralement comme suit : dans un four de fusion, on fond le verre de composition choisie pour former la vitrocéramique, puis on lamine le verre fondu en un ruban ou feuille standard en faisant passer le verre fondu entre des rouleaux de laminage et on découpe le ruban de verre aux dimensions souhaitées. Les plaques ainsi découpées sont ensuite céramisées de manière connue en soi, la céramisation consistant à cuire les plaques suivant le profil thermique choisi pour transformer le verre en le matériau polycristallin appelé « vitrocéramique » dont le coefficient de dilatation est nul ou quasi-nul et qui résiste à un choc thermique pouvant aller jusqu'à 700°C. La céramisation comprend généralement une étape d'élévation progressive de la température jusqu'au domaine de nucléation, généralement situé au voisinage du domaine de transformation du verre, une étape de traversée en plusieurs minutes de l'intervalle de nucléation, une nouvelle élévation progressive de la température jusqu'à la température du palier de céramisation, le maintien de la température du palier de céramisation pendant plusieurs minutes puis un refroidissement rapide jusqu'à la température ambiante.

Eventuellement, le procédé peut également comprendre une mise en forme de la plaque (pouvant être effectuée à différents moments du mode opératoire rappelé ci dessus pourvu que le matériau constituant la plaque soit à une température suffisamment élevée pour en permettre la déformation plastique) consistant par exemple en une opération d'effondrement, de moulage ou de pressage (par laminage ou par une autre opération) ou pliage, la céramisation de la plaque s'opérant généralement consécutivement à la mise en forme.

Le procédé comprend généralement une opération de découpe, par exemple par jet d'eau, suivie éventuellement par une opération de façonnage (meulage, biseautage,...). La plaque peut aussi subir d'autres opérations pendant sa fabrication (par exemple sérigraphie à des fins de signalisation ou esthétique, la sérigraphie se faisant de préférence avant la céramisation afin de permettre le cas échéant la cuisson de l'émail lors de ladite céramisation, etc) et peut être munie d'éléments rapportés tels que des poignées, etc..

Le revêtement est appliqué sur la plaque, généralement après céramisation, en ligne ou en reprise (par exemple après découpe et/ou façonnage de ladite plaque). Il peut être appliqué notamment par pyrolyse (poudre, liquide, gazeuse), par évaporation, ou par pulvérisation. De préférence, le revêtement est déposé par pulvérisation et/ou par une méthode de dépôt sous vide et/ou assistée par plasma ; on utilise en particulier le mode de dépôt de couche(s) par pulvérisation cathodique (par exemple par pulvérisation cathodique magnétron), notamment assistée par champ magnétique (et en courant continu ou alternatif), les oxydes ou nitrures étant déposés à partir de cible(s) de métal ou d'alliage ou de silicium ou céramique(s), etc. appropriées, si nécessaire dans des conditions oxydantes ou nitrurantes (mélanges le cas échéant d'argon/oxygène ou d'argon/azote). On peut déposer par exemple les couches d'oxyde par pulvérisation réactive du métal en question en présence d'oxygène et les couches en nitrures en présence d'azote. Pour faire du SiO₂ ou du Si₃N₄ on peut partir d'une cible en silicium que l'on dope légèrement avec un métal comme l'aluminium pour la rendre suffisamment conductrice. La ou les couches choisies selon l'invention se condensent sur le substrat de façon particulièrement homogène, sans qu'il ne se produise de séparation ou délaminage.

Il s'agit généralement d'un revêtement continu, cependant il n'est pas exclu d'ajouter une effet esthétique supplémentaire en ajoutant le revêtement sous forme d'un revêtement discontinu, par exemple sous forme d'une trame ou d'un décor (présentant de préférence un taux de couverture important, notamment supérieur à 50% ou supérieur à 75%), en utilisant des masques adéquats, par exemple en tôle perforée. Dans le cas où le revêtement comporte plusieurs couches, les couches sont déposées successivement les unes après les autres.

Les plaques du dispositif selon l'invention peuvent notamment être utilisées avec avantage pour réaliser une nouvelle gamme de foyers ou inserts de cheminées.

## Revendications

1. Dispositif chauffant de type insert de cheminée ou poêle, comprenant au moins une plaque formée d'au moins un substrat en vitrocéramique comprenant au moins un revêtement réfléchissant en face destinée à être tournée vers l'extérieur du dispositif chauffant, ladite plaque présentant une réflexion lumineuse R_{L} comprise entre 20 et 80%, le revêtement étant formé par un empilement de couches minces à base de matériau diélectrique alternativement à forts et faibles indices de réfraction comprenant l'alternance de couches d'oxydes suivante : TiO₂ /SiO₂/TiO₂.

2. Dispositif selon la revendication 1, **caractérisée en ce qu'**elle présente une résistance à la température d'au moins 500°C, de préférence d'au moins 600°C, de façon particulièrement préférée d'au moins 650°C, voire 700°C.

3. Dispositif selon l'une des revendications 1 à 2, **caractérisée en ce qu'**elle présente une réflexion lumineuse R_{L} comprise entre 30 et 70%.

4. Dispositif selon l'une des revendications 1 à 3, **caractérisée en ce que** le revêtement comprend au moins en surface extérieure une couche de fort indice de réfraction.

5. Dispositif selon l'une des revendications 1 à 4, **caractérisée en ce que** la plaque est également munie d'un revêtement présentant un autre type de fonctionnalité, généralement en face opposée, tel qu'un revêtement à fonction bas-émissive, par exemple en oxyde de métal dopé comme SnO2:F, ou un revêtement en SiO₂.

6. Procédé de fabrication d'une plaque vitrocéramique d'un dispositif selon l'une des revendications 1 à 5 comprenant une étape de dépôt d'au moins un revêtement réfléchissant sur le substrat en vitrocéramique.

7. Procédé selon la revendication 6, **caractérisé en ce que** le dépôt du revêtement réfléchissant se fait par pulvérisation cathodique.

## Patentansprüche

1. Heizvorrichtung vom Kamin- oder Herdeinsatztyp, umfassend mindestens eine Platte aus mindestens einem Keramikglassubstrat, das mindestens eine reflektierende Beschichtung auf der Fläche umfasst, die zur Außenseite der Heizvorrichtung gedreht werden soll, wobei die genannte Platte eine Lichtreflexion R_{L} zwischen 20 und 80 % aufweist, wobei die Beschichtung durch einen Stapel dünner Schichten auf der Basis eines dielektrischen Materials abwechselnd mit hohen und niedrigen Brechungsindizes gebildet wird, die den folgenden Wechsel der Oxidschichten umfassen: TiO₂ /SiO₂/TiO₂.

2. Vorrichtung nach Anspruch 1, **dadurch gekennzeichnet, dass** sie eine Temperaturbeständigkeit von mindestens 500 °C, vorzugsweise mindestens 600 °C, insbesondere bevorzugt mindestens 650 °C, sogar 700 °C aufweist.

3. Vorrichtung nach einem der Ansprüche 1 bis 2, **dadurch gekennzeichnet, dass** sie eine Lichtreflexion R_{L} zwischen 30 und 70 % aufweist.

4. Vorrichtung nach einem der Ansprüche 1 bis 3, **dadurch gekennzeichnet, dass** die Beschichtung mindestens auf der Außenfläche eine Schicht mit hohem Brechungsindex aufweist.

5. Vorrichtung nach einem der Ansprüche 1 bis 4, **dadurch gekennzeichnet, dass** die Platte im Allgemeinen auf der gegenüberliegenden Seite auch mit einer Beschichtung mit einer anderen Art von Funktionalität versehen ist, wie beispielsweise einer Beschichtung mit einer Niedrigstrahlungsfunktion, beispielsweise aus dotiertem Metalloxid wie SnO2:F oder einer Beschichtung aus SiO₂.

6. Verfahren zur Herstellung einer Keramikglasplatte einer Vorrichtung nach einem der Ansprüche 1 bis 5, umfassend einen Schritt des Abscheidens mindestens einer reflektierenden Beschichtung auf dem Keramikglassubstrat.

7. Verfahren nach Anspruch 6, **dadurch gekennzeichnet, dass** das Abscheiden der reflektierenden Beschichtung durch Sputtern stattfindet.

## Claims

1. A heating device of the fireplace insert or stove type, comprising at least one plate formed from at least one substrate made of glass-ceramic, comprising at least one reflective coating on a face intended to be turned toward the outside of the heating device, said plate having a light reflection R_{L} comprised between 20 and 80%, the coating being formed with a stack of thin layers based on dielectric materials alternating high and low refractive indices comprising the following alternation of oxide layers: TiO₂/SiO₂/TiO₂.

2. Device according to claim 1, **characterized in that** it has a temperature resistance of at least 500°C, preferably at least 600°C, particularly preferably at least 650°C or even 700°C.

3. Device according to any of claims 1 to 2, **characterized in that** it has a light reflection R_{L} comprised between 30 and 70%.

4. Device according to any of claims 1 to 3, **characterized in that** the coating comprises, at least on the external surface, a layer with a high refractive index.

5. Device according to any of claims 1 to 4, **characterized in that** the plate is also provided with a coating having another type of functionality, generally on the opposed face, such as a coating with a low-emissivity function, for example made of a doped metal oxide such as F:SnO₂, or a coating made of SiO₂.

6. A process for manufacturing a glass-ceramic plate of a device as claimed in one of claims 1 to 5 comprising a step of depositing at least one reflective coating on the glass-ceramic substrate.

7. The process according to claim 6, **characterized in that** the depositing step of the reflective coating is carried out by sputtering.
